# EUROPÄISCHE PATENTANMELDUNG

(11) **EP 0 903 070 A1**
(43) Veröffentlichungstag der Anmeldung: **24.03.1999**
(21) Anmeldenummer: 98117106.9
(22) Anmeldetag: 10.09.1998
(51) Int. Cl.: A01C 17/00

(54) **Vorrichtung zum Ausstreuen von körnigem Material**

(30) Priorität: 22.09.1997 DE 19741653; 31.10.1997 DE 19748178
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

Vorrichtung zum Ausstreuen von körnigem Material, insbesondere Dünger und/oder Saatgut mit zumindest einem Vorratsbehälter mit einstellbaren Dosierorganen und zugeordneten Streueinrichtungen, die vorzugsweise als rotierend angetriebene Schleuderscheiben, auf denen zumindest zwei Wurfschaufeln, vorzugsweise unterschiedlicher Länge angeordnet sind, ausgebildet sind Um eine Vorrichtung und Verfahren zum Einsatz dieser Vorrichtung vorzuschlagen, mit welcher das auszubringende Material in vorteilhafter Weise entsprechend den vorherrschenden Einsatzbedingungen optimal angepaßt ausgebracht werden kann, ist vorgesehen, daß die Vorrichtung vier Dosierorgane und vier Schleuderscheiben aufweist, daß mittels der vier Schleuderscheiben das auszubringende Material in vier einander angrenzenden und zumindest teilweise überlappenden Streustreifen, die eine gleichmäßige Materialverteilung in einer Arbeitsbreitenbahn ergeben, ausbringbar ist.

## Beschreibung

Die Erfindung betrifft eine Vorrichtung zum Ausstreuen von körnigem Material gemäß des Oberbegriffes des Patentanspruches 1. Eine derartige Vorrichtung ist in der deutschen Offenlegungsschrift 35 29 452 beschrieben. Bei dieser Vorrichtung sind vier Schleuderscheiben mit zugeordneten Dosierorganen vorgesehen. Die Wurfschaufeln auf jeder Schleuderscheibe weisen die gleiche Länge auf und jeweils zwei Schleuderscheiben streuen das Material in einander etwa annähernd überlappenden Streubahnen aus.

Der Erfindung liegt die Aufgabe zugrunde, eine Vorrichtung und Verfahren zum Einsatz dieser Vorrichtung vorzuschlagen, mit welcher das auszubringende Material in vorteilhafter Weise entsprechend den vorherrschenden Einsatzbedingungen optimal angepaßt ausgebracht werden kann.

Diese Aufgabe wird erfindungsgemäß dadurch gelöst, daß die Vorrichtung vier Dosierorgane und vier Schleuderscheiben, mit zumindest zwei Wurfschaufeln, vorzugsweise unterschiedlicher Länge aufweist, daß mittels der vier Schleuderscheiben das auszubringende Material in vier einander angrenzenden und zumindest teilweise überlappenden Streustreifen, die eine gleichmäßige Materialverteilung in einer Arbeitsbreitenbahn ergeben, ausbringbar ist. Infolge dieser Maßnahme kann die Gesamtarbeitsbreite in Teilarbeitsbreiten reduziert werden, so daß eine sogenannte Teilbreitenabschaltung möglich ist. Auch ist es durch diese Maßnahme möglich, durch die Einzelansteuerung der Dosierorgane die Materialausbringmenge in Teilarbeitsbreiten zu verändern.

Es ist möglich, daß zwei Schleuderscheiben mit zugeordneten Dosierorganen und Vorratsbehälter auf der Vorderseite eines Ackerschleppers und zwei Schleuderscheiben mit zugeordneten Dosierorganen und Vorratsbehälter auf der Rückseite des Ackerschleppers angeordnet sind. Diese Vorrichtung läßt sich mit zwei herkömmlichen Schleuderstreuern verwirklichen, wobei der eine Schleuderstreuer auf der Vorderseite und der andere Schleuderstreuer auf der Rückseite angeordnet ist. Hierbei sind die Dosierorgane und zugeordneten Schleuderscheiben für den jeweiligen Schleuderstreuer derart ausgewählt, daß die dem einen Vorratsbehälter zugeordneten Schleuderscheiben den inneren Bereich und die dem anderen Vorratsbehälter zugeordneten Schleuderscheiben den äußeren Bereich abstreuen. Es ist jedoch auch möglich, daß die dem einen Vorratsbehälter zugeordneten Schleuderscheiben die eine Arbeitsbreitenseite und die dem anderen Vorratsbehälter zugeordneten Schleuderscheiben die andere Seite der Arbeitsbreite bestreuen.

In einer anderen Ausführung ist vorgesehen, daß die vier Schleuderscheiben mit zugeordneten Dosierorganen und Vorratsbehälter auf der Rückseite des Ackerschleppers angeordnet sind. Hierdurch wird eine kompakte Maschine geschaffen, wobei die Schleuderscheiben nebeneinander und übereinander angeordnet sind. Dies hat den Vorteil, daß der Dünger quasi auf einer quer zur Fahrtrichtung liegende Ebene ausgestreut wird. Die Anordnung der Schleuderscheiben in einer quer zur Fahrtrichtung Ebene hat insbesondere beim Ein- und Abschalten der Dosierorgane am Vorgewende große Vorteile.

Mit der vorbeschriebenen Vorrichtung nach einem oder mehreren der Ansprüche 1 bis 3 lassen sich die Verfahren nach den Ansprüchen 4-6 für unterschiedliche Arbeitsbreitenbereiche durchführen. Je nach Einsatz der unterschiedlichen Wurfschaufelsätze für die verschiedenen Arbeitsbreitenbereiche lassen sich in den Arbeitsbreitenbereichen von 48 m und mehr, von 30-36 m und 20-28 m die Vierfach-Teilbreitenschaltung bzw. Vierfach -Ausbringmengenänderung in vorteilhafter Weise durchführen.

Um in einfacher Weise eine Anpassung der Ausbringmenge je Teilbreite automatisch an die vorherrschenden Einsatzbedingung bzw. Nährstoffversorgung des Bodens in vorteilhafter Weise anpassen zu können, ist vorgesehen, daß für die Einstellung der Dosierorgane eine elektronische Regeleinrichtung vorgesehen ist, daß in der Regeleinrichtung eine oder mehrere Applikationskarten hinterlegt sind, daß auf Grund der Applikationskarten in Verbindung mit einem Standortbestimmungssystem die Ausbringmenge der auszubringenden Materialmenge durch Einstellung und/oder der Verstellung der Dosierorgane bestimmbar ist.

Um eine Einrichtung und ein Verfahren zum Einsatz der Vorrichtung nach Anspruch 8 vorzuschlagen, mit welcher das auszubringende Material in vorteilhafter Weise entsprechend den vorherrschenden Einsatzbedingungen optimal ausgebracht werden kann, ist vorgesehen, daß zumindest einige der Wurfschaufeln jeweils aus einem inneren und einem äußeren Teil bestehen und teleskopartig ausziehbar und einschiebbar ausgebildet sind, wobei in der eingeschobenen Position des äußeren Teils ein erster, kleinerer Streuarbeitsbreitenbereich und in der ausgezogenen Position des äußeren Teils ein zweiter, größerer Streuarbeitsbreitenbereich erhalten wird. Infolge dieser Maßnahmen kann der Schleuderdüngerstreuer durch die entsprechende Längeneinstellung der Wurfschaufeln auf verschiedene Arbeitsbreitenbereiche und Arbeitsbreiten eingestellt werden. Dieses läßt sich durch die kennzeichnenden Merkmale des Patentanspruches 2 für Arbeitsbreiten zwischen 28 und 48 m und mehr verwirklichen.

Um mit einer Vorrichtung in vier Streustreifen das Material verteilen zu können, sind die kennzeichnenden Merkmale des Patentanspruches 3 vorgesehen.

Desweiteren ist ein Verfahren zum Einsatz dieser Vorrichtung gemäß der kennzeichnenden Merkmale des Patentanspruches 4 vorgesehen. Hierdurch läßt sich das Material in vier nebeneinander liegenden Streustreifen, die sich teilweise überlappen, ausbringen. Hierdurch ist es möglich, in den verschiedenen Arbeitsbreitenbereichen das Material gemäß den entsprechenden Einsatzbedingungen auszubringen.

Weitere Einzelheiten der Erfindung sind der Beispielsbeschreibung und den Zeichnungen zu entnehmen. Hierbei zeigen
- Fig. 1: einen Schleuderdüngerstreuer in der Seitenansicht und in Prinzipdarstellung,
- Fig. 2: den Schleuderdüngerstreuer in der Ansicht von hinten und in Prinzipdarstellung,
- Fig. 3: den Streufächer und das Streu- des von dem Schleuderdüngerstreuer gemäß den Fig. 1 und 2 erzeugten Materialverteilung in schematischer und vereinfachter Darstellungsweise,
- Fig 4: einen weiteren Schleuderdüngerstreuer in Seitenansicht und in Prinzipdarstellung zur Durchführung gemäß des erfindungsgemäßen Streuverfahrens,
- Fig 5: eine der oberen Schleuderscheiben im Teilschnitt und in vergrößertem Maßstab, wobei die Wurfschaufeln in ihrer längstmöglichen Position eingestellt sind,
- Fig.6: die Schleuderscheibe gemäß Fig.4, wobei jedoch die Wurfschaufeln in ihrer kürztmöglichen Position eingestellt sind und
- Fig.7: die Schleuderscheibe gemäß Fig.4, wobei die längere Wurfschaufel in ihrer längstmöglichen und die kürzere Wurfschaufel in ihrer kürztmöglichen Position eingestellt sind.

Der Schleuderdüngerstreuer weist die beiden hintereinander angeordneten Vorratsbehälter 1 und 2 sowie den Tragrahmen 3 auf. Die beiden Vorratsbehälter 1 und 2 sind durch die Trennwand 4 voneinander getrennt. Diese die beiden Vorratsbehälter 1 und 2 trennende Trennwand 4 kann herausnehmbar, verschwenkbar, absenkbar oder wegklappbar angeordnet sein.

Die beiden Vorratsbehälter 1 und 2 sind durch das sich quer zur Fahrtrichtung 5 erstreckende dachförmige Mittelteil 6 in ihrem unteren Bereich unterteilt. Der Tragrahmen 3 weist in seinem oberen Bereich den dem quer zur Fahrtrichtung 5 verlaufende dachförmigen Mittelteil 6 zugeordnete Querträger 7 auf. Der Querträger 7 ist mit den Vorratsbehältern 1 und 2 verbunden und bildet einen Teil der Wandung der Vorratsbehälter 1 und 2 und des dachförmigen Mittelteiles 6. Der Rahmen 3 weist den oberen quer zur Fahrtrichtung 5 verlaufenden vor dem Vorratsbehälter 1 angeordneten Querbalken 8 auf. Im Abstand zueinander sind an diesem Querbalken 8 die sich nach unten erstreckenden Unterlenkerstützen 9 angeordnet, an denen die Unterlenkeranschlüsse 10 angeordnet sind. Von diesen Unterlenkerstützen 9 aus erstrecken sich jeweils nach hinten Tragstreben 11, die auf der Rückseite mit einer unteren Quertraverse 12 verbunden sind. Im Abstand zu diesen unteren nach hinten ragenden Streben 11 sind oberhalb von diesen ebenfalls nach hinten ragenden Streben 13 angeordnet, an welchen wieder eine die Rückseite diese Streben 13 verbindende Quertraverse 14 angeordnet ist.

An den nach unten ragenden Unterlenkerstützen 9 des Tragrahmens 3 sind nach hinten und oben ansteigende Stützen 15 angesetzt, und an dem Querträger 7 angreifen.

Des weiteren sind die beiden Vorratsbehälter 1 und 2 durch das weitere, jedoch in Fahrtrichtung 5 laufende dachförmige Mittelteil 16 in ihrem unteren Bereich in die Auslauftrichter 1',1'',2',2'' aufgeteilt.

Unterhalb dieses in Fahrtrichtung 5 verlaufende dachförmige Mittelteil 16 ist ein aufrecht verlaufendes, als Hohlprofil ausgebildetes Stützelement 17 angeordnet, welches mit dem Querträger 7 und dem Querbalken 8 des Tragrahmens 3 im Bereich des Oberlenkeranschlusses 18 verbunden ist. Des weiteren ist dieses Stützelement 17 mit dem in Fahrtrichtung 5 verlaufenden dachförmigen Mittelteil 16 in dessen oberen Bereich verbunden. Darüber hinaus ist dieses Stützelement 17 mit den beiden Quertraversen 12 und 14 verbunden. Der vordere Bereich des Stützelementes 17 bildet den Oberlenkeranschluß 18. Somit ist in den vorderen Teil des Stützelementes 17 der Oberlenkeranschluß 18 integriert.

Der Querbalken 8 ist unterhalb des Oberlenkeranschlusses 18 angeordnet und mit dem Stützelement 17 verbunden. Innerhalb des als Hohlprofil ausgebildeten Stützelementes 17 sind Antriebselemente für die Rührwelle und die Streueinrichtung angeordnet, wie weiter unten beschrieben ist, angeordnet.

Durch diese Ausbildung des Tragrahmens 3 mit dem Querträger 7 und dem Querbalken 8, den Stützen 15 und dem Stützelement 17 wird eine leicht bauende, tragfähige Rahmenkonstruktion für den Tragrahmen 3 geschaffen.

Die beiden Vorratsbehälter 1 und 2 sind wie vor erwähnt, durch das in Fahrtrichtung 5 sich erstreckende dachförmige Mittelteil 16 jeweils im unteren Bereich in die Auslauftrichter 1',1'',2',2'' aufgeteilt.

Jedem unteren Trichterende der Vorratsbehälter 1 und 2 ist eine Schleuderscheibe 19 bzw. 20 mit darauf angeordneten Wurfschaufeln 21,21',22,22' zugeordnet. Die Wurfschaufeln 21,21',22,22' können in Scheibenebene mit unterschiedlichen Winkeln zur Radialen eingestellt werden, um so durch die unterschiedliche Winkelanstellung der Wurfschaufeln 21,21',22,22' für unterschiedliche Materialsorten und Arbeitsbreiten eine gleichmäßige Düngerverteilung erzielen zu können.

Weiterhin kann vorgesehen sein, daß verschieden ausgebildete Wurfschaufel-oder Schleuderscheibensätze zur Anpassung an verschiedene Arbeitsbreiten- und Streubreitenbereiche zum Einsatz kommen.

Die Schleuderscheiben 19 und 20 sind aus diesem Grunde auswechselbar auf ihren Antriebswellen 23 angeordnet. Die Schleuderscheiben 19 und 20 werden über die an dem Eingangsgetriebe 24 von der Schlepperzapfwelle und über Getriebezüge angetrieben. An der unteren Quertraverse 12 sind im Abstand S von 1500 mm die beiden Winkelgetriebe 25 angeordnet. Auf den Wellen 23 der Winkelgetriebe 25 sind die Schleuderscheiben 19 auswechselbar angeordnet. An der oberen Quertraverse 14 sind ebenfalls im Abstand S von 1500 mm die Winkelgetriebe 25 angeordnet, die die Schleuderscheiben 20 tragen.

Den Trichterenden sind jeweils Dosierorgane 26 zugeordnet. Den Trichterenden des hinteren Vorratsbehälters 2 sind als Bodenplatten 27 mit Auslauföffnungen, die über Schieber 28 in ihrer Öffnungsweite einzustellen und zu verschließen sind, ausgebildete Dosierorgane 26 zugeordnet. Die Schieber 28 können mittels Einstellelementen verstellt werden. Die Öffnungsweite läßt sich über Anschlagelemente 29, die mit Skalen 30 zusammenwirken, festlegen. Es ist auch möglich, die Schieber 28 mittels elektrischer Einstellelemente elektronisch einzustellen.

Den vorderen Trichterenden ist jeweils ein das Material von den Trichterenden zu den Schleuderscheiben 19 leitendes Leitelement 31 zugeordnet. Dieses Leitelement 31 ist als Zuführschacht mit an dessen unteren Enden angeordnetem Dosierorgan 26 ausgebildet. Der Zuführschacht 31 erweitert sich stetig nach unten. Dieses Dosierorgan 26 weist eine Bodenplatte 27 mit Auslauföffnung auf. Die Auslauföffnung ist über einen Schieber 28 in ihrer Öffnungsweite einstellbar und verschließbar. Die Schieber 28 können mittels Einstellelementen verstellt werden. Die Öffnungsweite läßt sich über Anschlagelemente 29, die mit Skalen 30 zusammenwirken, einstellen. Es ist auch möglich, die Schieber 28 mittels elektronischer Einstellelemente elektrisch einzustellen.

Die Skalen 30 und Anschlagelemente 29 können seitlich der Maschine oder auf deren Rückseite angeordnet sein. Oberhalb jeder Bodenplatte 27 ist jeweils ein Rührorgan 32 auf einer Rührwelle 33 und 33', die sich durch das Stützelement hindurch erstreckt, angeordnet. Auch dem vorderen Trichterende ist eine sich durch das Stützelement erstreckende Rührwelle 33'' mit Rührelementen 32' zugeordnet.

Auf den Schleuderscheibenantriebswellen 23 sind Schleuderscheiben 19 und 20 mit Wurfschaufeln 21, 21', 22, 22', deren äußeren Teile unterschiedlich große Umlaufbahnen beschreiben können bzw. mit verschiedene Umfangsgeschwindigkeiten umlaufen können angeordnet.

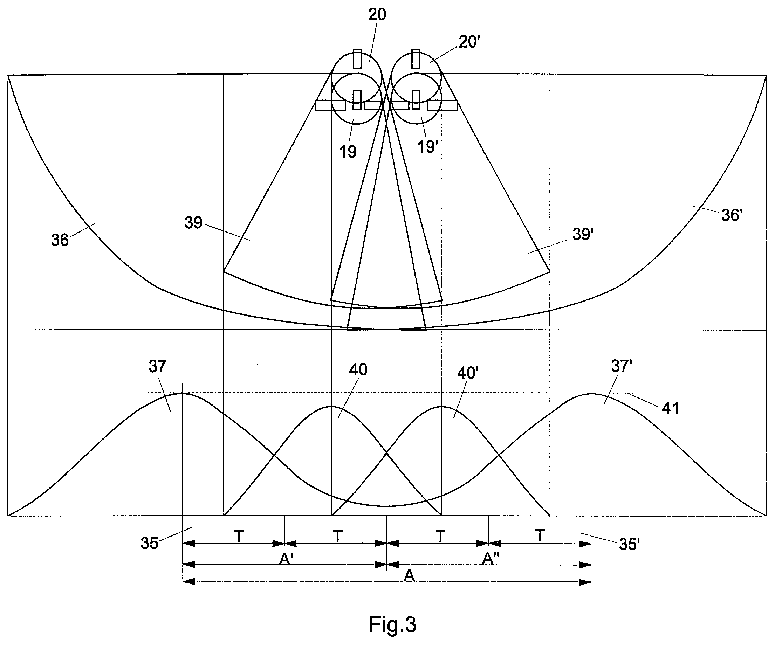

Um das Material über eine Arbeitsbreite A von 48 m und mehr verteilen zu können, sind auf den oberen Schleuderscheibenantriebswellen 23, die Schleuderscheiben 20 mit der längeren Wurfschaufel 22 und der kürzeren Wurfschaufel 22' angeordnet. Diese längeren Wurfschaufeln 22 weisen eine derartige Länge L auf, daß sie an ihren Abwurfkanten 34 mit einer Umlaufgeschwindigkeit von 30 bis 45 m/sec., vorzugsweise 41% m/sec umlaufen, während die kürzeren Wurfschaufeln 22' eine derartige Länge l aufweisen, daß sie mit ihrem äußeren Ende 34' mit einer Umlaufgeschwindigkeit von 28 - 36 m/sec. vorzugsweise 33 m/sec. umlaufen. Desweiteren weisen die äußeren unteren Leitflächen zumindest der längeren Wurfschaufel einen Anstellwinkel von 10 bis 30°, vorzugsweise von etwa 22° zur Horizontalen auf. Diese Schleuderscheiben 20 mit den Wurfschaufeln 22, 22' bestreuen den äußeren Arbeitsbreitenbereich 35 und erzeugen die Streufächer 36, 36' sowie die unten dargestellte Düngerverteilung 37, 37'. Auf den unteren Schleuderscheibenantriebswellen 23 sind jeweils die Schleuderscheiben 19 mit den kürzeren Wurfschaufeln 21 und 21' und den längeren Wurfschaufeln 21 angeordnet. Diese längeren Wurfschaufeln 21 weisen eine derartige Länge a auf, daß sie mit ihrer äußeren Abstreukante 38 mit einer Umlaufgeschwindigkeit von 25 bis 31 m/sec., vorzugsweise ca. 29 m/sec. umlaufen, während die kürzere Wurfschaufel 21' eine derartige Länge b aufweist, daß ihre äußere Abstreukante 38' mit einer Umlaufgeschwindigkeit von 18 bis 24 m/sec., vorzugsweise 21 m/sec. umläuft. Die Wurfschaufeln 21, 21' der unteren Schleuderscheiben 19 erzeugen die Streufächer 39, 39' und verteilen das Material gemäß der in Fig. 3 schematisch dargestellten Streustärke 40, 40'. Die mittels der 4 Schleuderscheiben ausgebrachte Materialien, werden wie in Fig. 3 unten erkennbar ist, in vier in einander angrenzenden und zumindest teilweise überlappende Streustreifen, die eine gleichmäßige Materialverteilung 41, wie die strichpunktierte Linie andeutet, in einer Arbeitsbreitenbahn über die Arbeitsbreite A ergeben, ausgebracht.

Durch Abschalten der Materialzufuhr mittels der Dosierorgane 26 läßt sich, wie aus Fig. 3 leicht erkennbar ist, sich die Arbeitsbreite A wahlweise auf die rechte oder linke halbseitige Arbeitsbreite A' oder A'' reduzieren. Weiterhin ist, wie aus Fig. 3 erkennbar ist, die Arbeitsbreite A durch unabhängiges Abschalten der Dosierorgane entsprechend der zu bestreuenden Fläche in vier Teilschritten entsprechend der Teilarbeitsbreite T zu reduzieren. Ebenfalls läßt sich in vier Teilarbeitsbreiten T die Materialmenge verändern. Hierzu sind die Dosierorgane 26 mit einer nicht dargestellten Regeleinrichtung verbunden. In dieser Regeleinrichtung sind ein oder mehrere Applikationskarten abgelegt. Aufgrund der Applikationskarten kann in Verbindung mit einem Standortbestimmungssystem die Ausbringung der auszubringenden Materialmenge durch Ein- oder Verstellung einzelner Dosierorgane 26 in Arbeitsbreitenbereiche T verändert bzw. durch Abschalten einzelner Dosierorgane 26 die Arbeitsbreite verkleinert oder durch Zuschalten von einzelner Dosierorgane vergrößert werden.

Wenn in einem Fahrgassensystem nicht von 40 bis 48 m, sondern von 30 bis 36 m gearbeitet werden soll, sind anstelle der vorbeschriebenen Schleuderscheiben mit darauf angeordneten Wurfschaufeln andere Schleuderscheiben mit entsprechenden Wurfschaufeln auf den Schleuderscheibenantriebswellen anzuordnen. Bei einem 36 m- Fahrgassensystem weisen dann die längeren Wurfschaufeln 22 für den äußeren Arbeitsbreitenbereich 35 an ihrer Abstreukante 34 eine Umlaufgeschwindigkeit von 37 - 44 m/sec., vorzugsweise 41 m/sec. auf, während die kürzeren Wurfschaufeln 22' dieser Schleuderscheiben eine Umlaufgeschwindigkeit an ihrer Abstreukante 34' von 30 - 36 m/sec., vorzugsweise 33 m/sec. aufweisen. Die Schleuderscheiben mit den Wurfelementen 21, 21' für die jeweils inneren Streustreifen weisen eine derartige Länge auf, daß die längeren Wurfschaufeln 21 an ihren Wurfschaufelabwurfenden 38 eine Umlaufgeschwindigkeit von 22-27 m/sec., vorzugsweise ca. 24 m/sec. aufweisen, während die dazugehörigen kürzeren Wurfschaufeln 21' an ihren Abwurfenden 38' eine Umlaufgeschwindigkeit von 17-21 m/sec., vorzugsweise ca. 19 m/sec. aufweisen.

Wenn in einem Fahrgassensystem nicht von 40 bis 48m, sondern von 20 bis 28m gearbeitet werden soll, sind anstelle der vorbeschriebenen Schleuderscheiben mit darauf angeordneten Wurfschaufeln andere Schleuderscheiben mit entsprechenden Wurfschaufeln auf den Schleuderscheibenantriebswellen anzuordnen. Bei einem 36 m-Fahrgassensystem weisen dann die längeren Wurfschaufeln 22 für den äußeren Arbeitsbreitenbereich 35 an ihrer Abstreukante 34 eine Umlaufgeschwindigkeit von 31 -37m/sec., vorzugsweise 34 m/sec. auf, während die kürzeren Wurfschaufeln 22' dieser Schleuderscheiben eine Umlaufgeschwindigkeit an ihrer Abstreukante 34' von 27 - 33 m/sec., vorzugsweise 24 m/sec. aufweisen. Die Schleuderscheiben mit den Wurfelementen 21, 21' für die jeweils inneren Streustreifen weisen eine derartige Länge auf, daß die längeren Wurfschaufeln 21 an ihren Wurfschaufelabwurfenden 38 eine Umlaufgeschwindigkeit von 17 - 22 m/sec., vorzugsweise ca. 19 m/sec. aufweisen, während die dazugehörigen kürzeren Wurfschaufeln 21' an ihren Abwurfenden 38' eine Umlaufgeschwindigkeit von 14 - 20 m/sec., vorzugsweise ca. 17 m/sec. aufweisen.

Die Darstellung der Streuweise in Fig. 3 gilt sinngemäß auch für Arbeitsbreiten A von 30 bis 36 m und für 20 bis 28 m mit der entsprechend dazugehörigen Düngerverteilung.

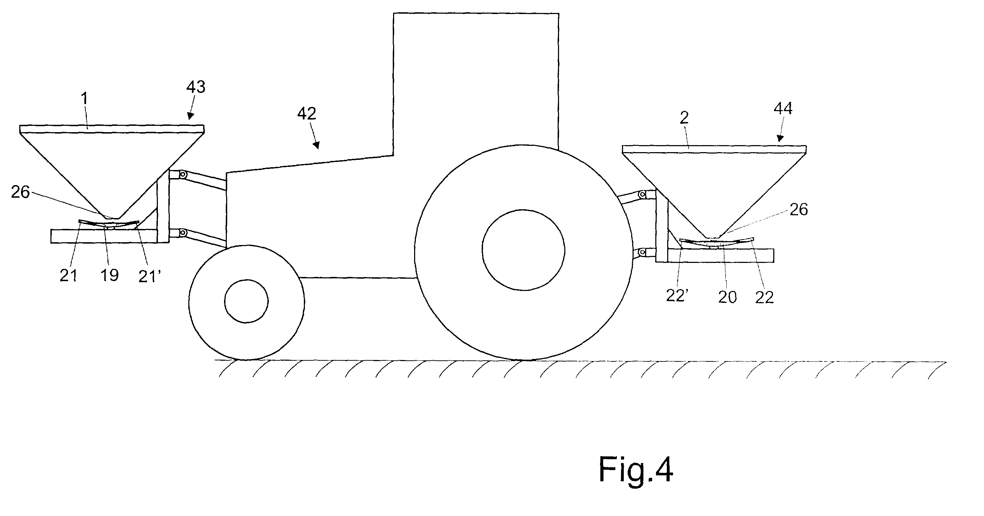

Die Fig. 4 zeigt eine weitere Vorrichtung zum Ausstreuen von körnigem Material. Diese Vorrichtung weist einen ersten Schleuderstreuer 43 auf, der an dem Frontkraftheber eines Ackerschleppers 42 angeordnet ist. Auf der Rückseite des Ackerschleppers 42 ist der weitere Schleuderstreuer 44 an dem Dreipunktkraftheber angekuppelt.

Der Schleuderstreuer 43 weist den Vorratsbehälter 1, die beiden Dosierorgane 26, die beiden im Abstand von 1,50m zueinander angeordneten Schleuderscheiben 19 mit der jeweils darauf angeordneten längeren Wurfschaufel 21 und kürzeren Wurfschaufel 21'. Der Schleuderstreuer 44 weist den Vorratsbehälter 2, die beiden Dosierorgane 26, die beiden im Abstand von 1,50m zueinander angeordneten Schleuderscheiben 20 mit der jeweils darauf angeordneten längeren Wurfschaufel 22 und kürzeren Wurfschaufel 22'.

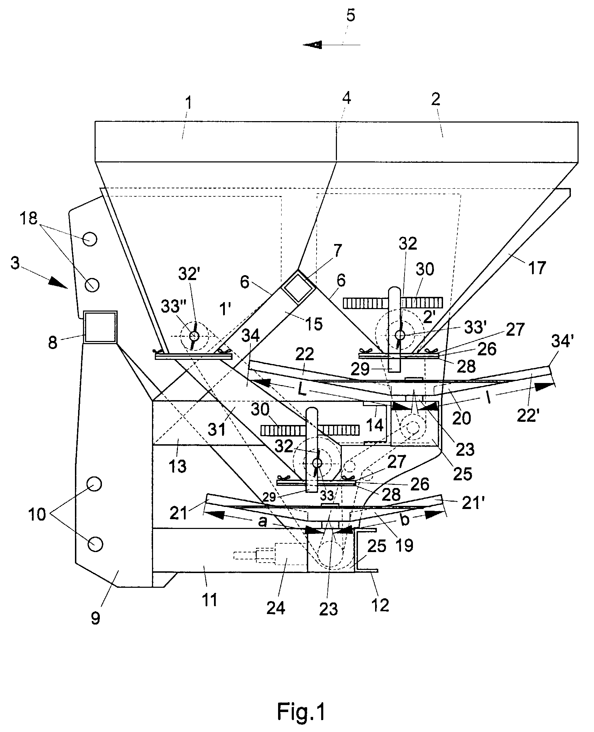

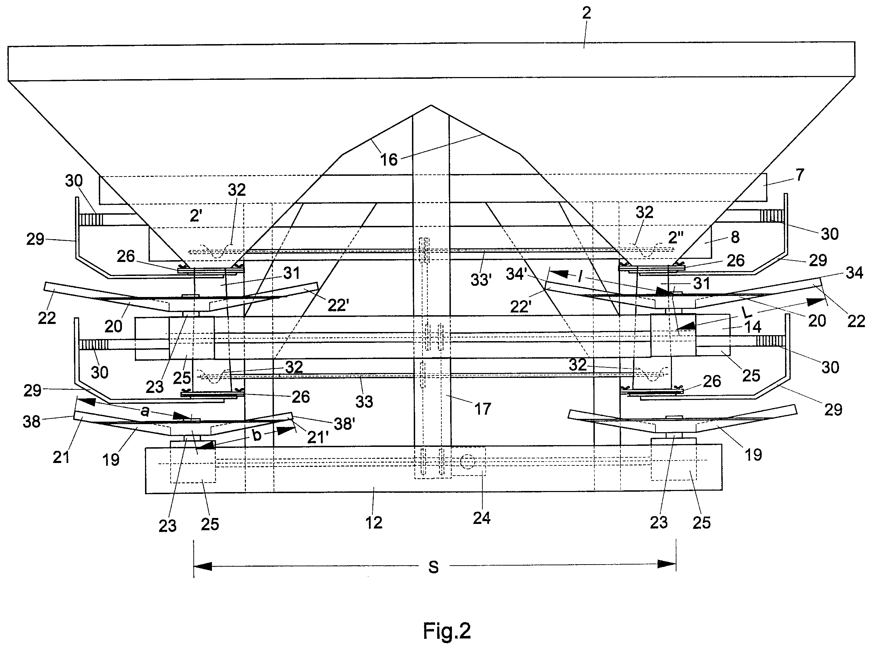

Die Arbeitsweise der aus beiden Schleuderstreuern 43 und 44 bestehenden Vorrichtung entspricht dem Schleuderstreuer gemäß den Fig. 1 und 2, so daß auch diese Vorrichtung entsprechend arbeitet und den Dünger entsprechend der Darstellung in Fig. 3 verteilt. Die zu dem Schleuderstreuer gemäß Fig. 1 und 2 gemachten Ausführungen gelten auch für die Vorrichtung gemäß Fig. 4.

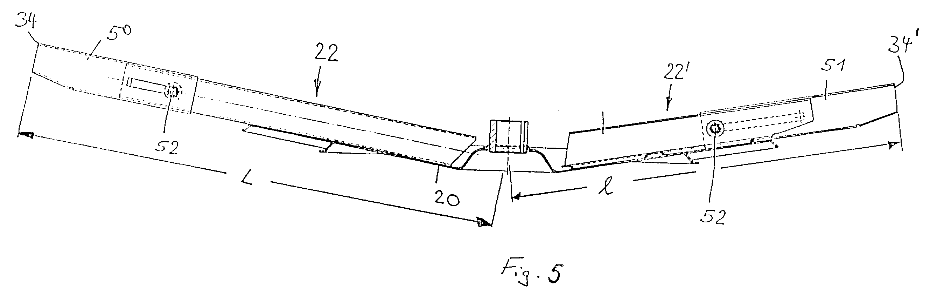

Auf den Schleuderscheibenantriebswellen 23 können Schleuderscheiben gemäß Fig.5 mit Wurfschaufeln 22, 22', deren äußeren Teile unterschiedlich große Umlaufbahnen beschreiben können bzw. mit verschiedene Umfangsgeschwindigkeiten umlaufen können angeordnet. Die Wurfschaufeln 22, 22' bestehen jeweils aus zwei teleskopisch ausziehbaren Teilen 50 und 51, nämlich einem inneren Teil 50 und dem gegenüber diesem Teil 50 verschiebbaren äußeren Teil 51, welche über das als Schraube 52 ausgebildete Einstellelement in einstellbarer Weise zu einander zu fixieren sind, wie Fig.5 zeigt.

Um das material über eine Arbeitsbreite A von 48 m und mehr verteilen zu können, sind auf den oberen Schleuderscheibenantriebswellen 23, die Schleuderscheiben 20 mit der längeren Wurfschaufel 22 und der kürzeren Wurfschaufel 22' angeordnet. Die längeren Wurfschaufeln 22 und die kürzeren Wurfschaufeln 22' sind jeweils in ihrer längstmöglichen Stellung ausgezogen und eingestellt; d. h., daß jeweils das äußere Teil 51 in die äußerste Position geschoben und eingestellt ist. Diese längeren Wurfschaufeln 22 weisen dann eine derartige Länge L auf, daß sie an ehren Abwurfkanten 34 mit einer Umlaufgeschwindigkeit von 30 bis 45 m/sec., vorzugsweise ca. 41 m/sec umlaufen, während die kürzeren Wurfschaufeln 22' eine derartige Länge l aufweisen, daß sie mit ihrem äußeren Ende 34' mit einer Umlaufgeschwindigkeit von 27 - 34 m/sec. vorzugsweise ca. 30,5 m/sec. umlaufen. Desweiteren weisen die äußeren unteren Leitflächen zumindest der längeren Wurfschaufel einen Anstellwinkel von 10 bis 30°, vorzugsweise von etwa 22° zur Horizontalen auf. Diese Schleuderscheiben 20 mit den Wurfschaufeln 22, 22' bestreuen den äußeren Arbeitsbreitenbereich 35 und erzeugen die Streufächer 36, 36' sowie die unten dargestellte Düngerverteilung 37, 37'. Auf den unteren Schleuderscheibenantriebswellen 23 sind jeweils die Schleuderscheiben 19 mit den kürzeren Wurfschaufeln 21 und 21' und den längeren Wurfschaufeln 21 angeordnet. Diese längeren Wurfschaufeln 21 weisen eine derartige Länge a auf, daß sie mit ihrer äußeren Abstreukante 38 mit einer Umlaufgeschwindigkeit von 25 bis 31 m/sec., vorzugsweise ca. 29 m/sec. umlaufen, während die kürzere Wurfschaufel 21' eine derartige Länge b aufweist, daß ihre äußere Abstreukante 38' mit einer Umlaufgeschwindigkeit von 18 bis 24 m/sec., vorzugsweise 21 m/sec. umläuft. Die Wurfschaufeln 21, 21' der unteren Schleuderscheiben 19 erzeugen die Streufächer 39, 39' und verteilen das Material gemäß der in Fig. 3 schematisch dargestellten Streustärke 40, 40'. Die mittels der 4 Schleuderscheiben ausgebrachte Materialien, werden wie in Fig. 3 unten erkennbar ist, in vier in einander angrenzenden und zumindest teilweise überlappende Streustreifen, die eine gleichmäßige Materialverteilung 41, wie die strichpunktierte Linie andeutet, in einer Arbeitsbreitenbahn über die Arbeitsbreite A ergeben, ausgebracht.

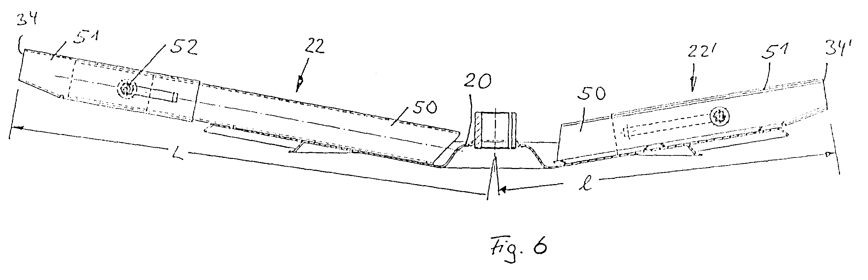

Wenn in einem Fahrgassensystem nicht von 40 bis 48 m, sondern von 30 bis 36 m gearbeitet werden soll, werden die äußeren Teile 51 der Wurfschaufeln 22, 22' in die eingeschobene Position eingestellt, wie Fig.6 zeigt. Bei einem 36 m-Fahrgassensystem weisen dann die längeren Wurfschaufeln 22 für den äußeren Arbeitsbreitenbereich 35 an ihrer Abstreukante 34 eine Umlaufgeschwindigkeit von 35 - 39 m/sec., vorzugsweise ca. 37 m/sec. auf, während die kürzeren Wurfschaufeln 22' eine Umlaufgeschwindigkeit an ihrer Abstreukante 34' von 21 - 28 m/sec., vorzugsweise ca. 24 m/sec. aufweisen. Die Schleuderscheiben mit den Wurfelementen 21, 21' für die jeweils inneren Streustreifen sind ausgetauscht worden, so daß dann eine derartige Länge aufweisen, daß die längeren Wurfschaufeln 21 an ihren Wurfschaufelabwurfenden 38 eine Umlaufgeschwindigkeit von 21 - 27 m/sec., vorzugsweise ca. 24 m/sec. aufweisen, während die dazugehörigen kürzeren Wurfschaufeln 21' an ihren Abwurfenden 38' eine Umlaufgeschwindigkeit von 17 - 21 m/sec., vorzugsweise ca. 19 m/sec. aufweisen.

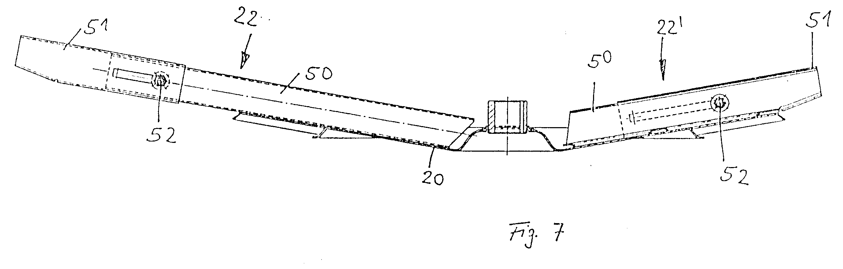

Es ist auch möglich, wie Fig.7 für eine Einstellvorrichtung zeigt, nur bei einer Wurfschaufel das äußere Teil 51 auszuziehen, während bei der anderen Wurfschaufel das äußere Teil 51 in eingeschobener Position fixiert ist. Die unterschiedlichen Einstellungen der Wurfschaufeln bzw. Zwischenpositionen der äußeren Teile 51 können bei verschiedenen Einsatzbedingungen oder Anpassung an die Streueigenschaften des auszubringenden Düngers erforderlich sein.

## Patentansprüche

1. Vorrichtung zum Ausstreuen von körnigem Material, insbesondere Dünger und/oder Saatgut mit zumindest einem Vorratsbehälter mit einstellbaren Dosierorganen und zugeordneten Streueinrichtungen, die vorzugsweise als rotierend angetriebene Schleuderscheiben, auf denen zumindest zwei Wurfschaufeln angeordnet sind, ausgebildet sind, dadurch gekennzeichnet, daß die Vorrichtung vier Dosierorgane (26)und vier Schleuderscheiben (19, 20) mit jeweils zumindest zwei Wurfschaufeln (21, 21', 22, 22'), vorzugsweise unterschiedlicher Länge, aufweist, daß mittels der vier Schleuderscheiben (19, 20)das auszubringende Material in vier einander angrenzenden und zumindest teilweise überlappenden Streustreifen (37, 37', 40, 40') die eine gleichmäßige Materialverteilung (41) in einer Arbeitsbreitenbahn (A) ergeben, ausbringbar ist.

2. Vorrichtung nach Anspruch 1, dadurch gekennzeichnet, daß zwei Schleuderscheiben (19) mit zugeordneten Dosierorganen (26) und Vorratsbehältern (1) auf der Vorderseite eines Ackerschleppers (42) und zwei Schleuderscheiben (20) mit zugeordneten Dosierorganen (26) und Vorratsbehälter (2) auf der Rückseite des Ackerschleppers angeordnet sind.

3. Vorrichtung nach Anspruch 1, dadurch gekennzeichnet, daß die vier Schleuderscheiben (19, 20) mit zugeordneten Dosierorganen (26) und Vorratsbehälter (1, 2) auf der Rückseite des Ackerschleppers angeordnet sind.

4. Verfahren zum Einsatz der Vorrichtung an einem oder mehreren der Ansprüche 1 bis 3, dadurch gekennzeichnet, daß zur Verteilung des Materials über eine Arbeitsbreitenbereich (A) von 40 bis 48 m und mehr Schleuderscheiben (19, 20) mit Wurfelementen (22, 22') für die jeweils äußeren Streustreifen (35, 35') verwendet werden, deren Wurfschaufelabwurfenden (34) der längeren Wurfschaufel (22) eine Umlaufgeschwindigkeit von 37 bis 45 m/sec, vorzugsweise ca. 41 m/sec und der kürzeren Wurfschaufel (22') eine Umlaufgeschwindigkeit von 28 bis 36 m/sec ,vorzugsweise ca. 33 m/sec aufweisen, und Schleuderscheiben (19) mit Wurfelementen (21, 21') für die jeweils inneren Streustreifen verwendet werden, deren Wurfschaufelabwurfenden (38) der längere Wurfschaufel (21) eine Umlaufgeschwindigkeit von 25 bis 32 m/sec , vorzugsweise ca. 29 m/sec und der kürzeren Wurfschaufel (21') eine Umlaufgeschwindigkeit von 18 bis 24 m/sec, vorzugsweise ca. 21 m/sec aufweisen.

5. Verfahren zum Einsatz der Vorrichtung an einem oder mehreren der Ansprüche 1 bis 3, dadurch gekennzeichnet, daß zur Verteilung des Materials über eine Arbeitsbreitenbereich (A) von 30 bis 36 m Schleuderscheiben (20) mit Wurfelementen (22, 22') für die jeweils äußeren Streustreifen (35, 35') verwendet werden, deren Wurfschaufelabwurfenden (34) der längere Wurfschaufel (22) eine Umlaufgeschwindigkeit von 37 bis 44 m/sec , vorzugsweise ca. 41 m/sec und der kürzere Wurfschaufel (22') eine Umlaufgeschwindigkeit von 30 bis 36 m/sec, vorzugsweise ca. 33 m/sec aufweisen, und Schleuderscheiben (19) mit Wunfelementen (21, 21') für die jeweils inneren Streustreifen verwendet werden, deren Wurfschaufelabwurfenden (38) der längere Wurfschaufel (21) eine Umlaufgeschwindigkeit von 22 bis 27 m/sec , vorzugsweise ca. 24 m/sec und der kürzere Wurfschaufel (21') eine Umlaufgeschwindigkeit von 17 bis 21 m/sec, vorzugsweise ca. 19 m/sec aufweisen.

6. Verfahren zum Einsatz der Vorrichtung an einem oder mehreren der Ansprüche 1 bis 3, dadurch gekennzeichnet, daß zur Verteilung des Materials über eine Arbeitsbreitenbereich von 20 bis 28 m vorzugsweise 24 m Schleuderscheiben (20) mit Wurfelementen (22, 22') für die jeweils äußeren Streustreifen (35, 35') verwendet werden, deren Wurfschaufelabwurfenden (34) der längere Wurfschaufel (22) eine Umlaufgeschwindigkeit von 31 bis 37 m/sec, vorzugsweise ca. 34 m/sec und der kürzere Wurfschaufel (22') eine Umlaufgeschwindigkeit von 27 bis 33 m/sec, vorzugsweise ca. 30 m/sec aufweisen, und Schleuderscheiben (19) mit Wurfelementen (21, 21') für die jeweils inneren Streustreifen verwendet werden, deren Wurfschaufelabwurfenden (38) der längere Wurfschaufel (21) eine Umlaufgeschwindigkeit von 17 bis 22 m/sec , vorzugsweise ca. 19 m/sec und der kürzere Wurfschaufel (21') eine Umlaufgeschwindigkeit von 14 bis 19 m/sec, vorzugsweise ca. 17 m/sec aufweisen.

7. Vorrichtung nach Anspruch 1, dadurch gekennzeichnet, daß für die Einstellung der Dosierorgane (26) eine elektronische Regeleinrichtung vorgesehen ist, daß in der Regeleinrichtung Applikationskarten hinterlegt sind, daß aufgrund der Applikationskarten in Verbindung mit einem Standortbestimmungssystem die Ausbringmenge der auszubringenden Materialmenge durch Einstellung und/oder Verstellung der Dosierorgane (26) festlegbar ist.

8. Vorrichtung zum Ausstreuen von körnigem Material, insbesondere Dünger und/oder Saatgut mit zumindest einem Vorratsbehälter mit einstellbaren Dosierorganen und zugeordneten Streueinrichtungen, die vorzugsweise als rotierend angetriebene Schleuderscheiben, auf denen zumindest zwei Wurfschaufeln angeordnet sind, ausgebildet sind, insbesondere nach Anspruch 1, dadurch gekennzeichnet, daß zumindest einige der Wurfschaufeln (22, 22') jeweils aus einem inneren und einem äußeren Teil (50, 51) bestehen und teleskopartig ausziehbar und einschiebbar ausgebildet sind, wobei in der eingeschobenen Position des äußeren Teils (51) ein erster, kleinerer Streuarbeitsbreitenbereich und in der ausgezogenen Position des äußeren Teils (52) ein zweiter, größerer Streuarbeitsbreitenbereich erhalten wird.

9. Vorrichtung nach Anspruch 8, dadurch gekennzeichnet, daß zur Verteilung des Materials über einen Arbeitsbreitenbereich bis zu 48m und mehr die Wurfschaufeln in einer ausgezogenen Position eingestellt werden, während die Wurfschaufeln über einen Arbeitsbreitenbereich bis zu 36m in eingeschobener Position eingesetzt werden, daß das Abwurfende der längeren Wurfschaufel (22) in der ausgezogenen Position eine Umlaufgeschwindigkeit von 37 - 45 m/s, vorzugsweise ca. 41 m/s und das Wurfschaufelende der ausgezogenen kürzeren Wurfschaufel (22') eine Umlaufgeschwindigkeit von 27 - 34 m/s, vorzugsweise ca. 30,5 m/s aufweist, daß das äußere Abwurfende der längeren Wurfschaufel (22) in der eingeschobenen Position eine Umlaufgeschwindigkeit von 35 - 39 m/s, vorzugsweise ca. 37 m/s aufweist, daß das Abwurfende der kürzeren Wurfschaufel (22') in der eingeschobenen Position eine Umlaufgeschwindigkeit von 21 - 28 m/s, vorzugsweise ca. 24 m/s aufweist.

10. Vorrichtung insbesondere nach Anspruch 8, dadurch gekennzeichnet, daß die Vorrichtung vier Dosierorgane (26) und vier Schleuderscheiben (19, 20) mit jeweils zumindest zwei Wurfschaufeln (21, 21', 22, 22'), vorzugsweise unterschiedlicher Länge aufweist, daß mittels der vier Schleuderscheiben (19, 20) das auszubringende Material in vier einander angrenzenden und zumindest teilweise überlappenden Streustreifen (37, 37', 40, 40'), die eine gleichmäßige Materialverteilung in einer Arbeitsbreitenbahn (A) ergeben, ausbringbar ist.

11. Verfahren zum Einsatz der Vorrichtung nach dem Oberbegriff des Anspruches 8, dadurch gekennzeichnet, daß zur Verteilung des Materials über einen Arbeitsbreitenbereich von 40 - 48 m und mehr, die Wurfelemente (22, 22') für die jeweils äußeren Streustreifen derart eingestellt werden, daß deren Wurfschaufelabwurfenden (34) der längeren Wurfschaufel (22) eine Umiaufgeschwindigkeit von 37 - 45 m/s, vorzugsweise ca. 41 m/s und der kürzeren Wurfschaufel (22') eine Umlaufgeschwindigkeit von 27 - 34 m/s, vorzugsweise ca. 30,5 m/s aufweisen, und daß die Wurfelemente (21, 21') für die jeweils inneren Streustreifen derart ausgebildet und/oder eingestellt werden, daß deren Wurfschaufelabwurfenden der längeren Wurfschaufel (21) eine Umlaufgeschwindigkeit von 25 - 32 m/s, vorzugsweise ca. 29 m/s und der kürzeren Wurfschaufel (21') eine Umlaufgeschwindigkeit von 18 - 24 m/s, vorzugsweise ca. 21 m/s aufweisen, daß zur Verteilung des Materials über einen Arbeitsbreitenbereich von 30 - 36 m die Wurfschaufeln (21, 21', 22, 22') derart ausgebildet und/oder eingestellt werden, daß für die jeweils äußeren Streustreifen die Wurfschaufelabwurfenden der längeren Wurfschaufel (22) eine Umlaufgeschwindigkeit von 35 - 39 m/s, vorzugsweise ca. 37 m/s und die kürzere Wurfschaufel (22') eine Umlaufgeschwindigkeit von 21 - 28 m/s, vorzugsweise ca. 24 m/s aufweisen, und die Wurfschaufeln (21, 21') für die jeweils inneren Streustreifen eine derartige Länge aufweisen, daß die Wurfschaufelabwurfenden der längeren Wurtschaufel (21) eine Umlaufgeschwindigkeit von 21 - 27 m/s, vorzugsweise ca.24 m/s und die kürzere Wurfschaufel (21') eine Umlaufgeschwindigkeit von 17 - 23 m/s, vorzugsweise ca. 19 m/s aufweisen.

12. Verfahren zum Einsatz der Vorrichtung nach dem Oberbegriff des Anspruches 8, dadurch gekennzeichnet, daß zur Verteilung des Materials über einen Arbeitsbreitenbereich von 40 - 48 m und mehr, die Wurfelemente für die jeweils äußeren Streustreifen derart eingestellt werden, daß deren Wurfschaufelabwurfenden der längeren Wurfschaufel (22) eine Umlaufgeschwindigkeit von 37 - 45 m/s, vorzugsweise ca. 41 m/s und der kürzeren Wurfschaufel (22') eine Umlaufgeschwindigkeit von 27 - 34 m/s, vorzugsweise ca. 30,5 m/s aufweisen, und daß die Wurfelemente für die jeweils inneren Streustreifen derart ausgebildet und/oder eingestellt werden, daß deren Wurfschaufelabwurfenden der längeren Wurfschaufel (21) eine Umlaufgeschwindigkeit von 25 - 32 m/s, vorzugsweise ca. 29 m/s und der kürzeren Wurfschaufel (21') eine Umlaufgeschwindigkeit von 18 - 24 m/s, vorzugsweise ca. 21 m/s aufweisen.

13. Verfahren zum Einsatz der Vorrichtung nach dem Oberbegriff des Anspruches 8, dadurch gekennzeichnet, daß zur Verteilung des Materials über einen Arbeitsbreitenbereich von 30 - 36 m die Wurfschaufeln derart ausgebildet und/oder eingestellt werden, daß für die jeweils äußeren Streustreifen die Wurfschaufelabwurfenden der längeren Wurfschaufel (22) eine Umlaufgeschwindigkeit von 35 - 39 m/s, vorzugsweise ca. 37 m/s und die kürzere Wurfschaufel (22') eine Umlaufgeschwindigkeit von 21 - 28 m/s, vorzugsweise ca. 24 m/s aufweisen, und die Wurfschaufeln für die jeweils inneren Streustreifen eine derartige Länge aufweisen, daß die Wurfschaufelabwurfenden der längeren Wurfschaufel (21) eine Umlaufgeschwindigkeit von 21 - 27 m/s, vorzugsweise ca.24 m/s und die kürzere Wurfschaufel (21') eine Umlaufgeschwindigkeit von 17 - 23 m/s, vorzugsweise ca.19 m/s aufweisen.

14. Verfahren zum Einsatz der Vorrichtung nach dem Oberbegriff des Anspruches 8, dadurch gekennzeichnet, daß zur Verteilung des Materials über einen Arbeitsbreitenbereich von 18 - 28 m die Wurfschaufeln derart ausgebildet und/oder eingestellt werden, daß für die jeweils äußeren Streustreifen die Wurfschaufelabwurfenden der längeren Wurfschaufel eine Umlaufgeschwindigkeit von 32 - 36 m/s, vorzugsweise ca. 34 m/s und die kürzere Wurfschaufel eine Umlaufgeschwindigkeit von 27 - 33 m/s, vorzugsweise ca. 30 m/s aufweisen, und die Wurfschaufeln für die jeweils inneren Streustreifen eine derartige Länge aufweisen, daß die Wurfschaufelabwurfenden der längeren Wurfschaufel eine Umlaufgeschwindigkeit von 17 - 21 m/s, vorzugsweise ca. 19 m/s und die kürzere Wurfschaufel eine Umlaufgeschwindigkeit von 15 - 19 m/s, vorzugsweise ca. 17 m/s aufweisen.
